# EUROPEAN PATENT APPLICATION

(11) **EP 2 744 304 A2**
(43) Date of publication of application: **18.06.2014**
(21) Application number: 13197201.0
(22) Date of filing: 13.12.2013
(51) Int. Cl.: H05B 33/08

(54) **Assembly for detecting the light emission of emergency light sources, particularly of the LED type**

(30) Priority: 17.12.2012 IT BO20120674
(71) Applicant: Schneider Electric Industrie Italia S.p.A., 02100 Rieti, Località Vazia (IT)
(72) Inventor: Bonzagni, Paolo, 44042 CENTO FE (IT); Montaguti, Alberto, 44042 CENTO FE (IT)
(74) Representative: Modiano, Micaela Nadia

(57) **Abstract**

An assembly (1) for detecting the light emission of emergency light sources (2), particularly of the LED type, comprising at least one detector (3) of the power supply voltage of the at least one light source (2) having a predefined emission frequency, at least one element (4) for measuring the current that circulates in the at least one light source (2).

The assembly (1) also comprises at least one optical sensor (6) at the predefined frequency of said light source (2), a first filtering optical screen (7), which is permeable only to luminous radiation having a frequency that is proximate to the predefined frequency, the first optical screen (7) being interposed between the at least one optical sensor (6) and the at least one light source (2); the assembly (1) also comprises a second filtering optical screen (8) for the conversion of the incident luminous radiation into luminous radiation in the visible spectrum during its passage through said second screen (8). A control unit (9) compares the detected voltage value with the reference value, the detected current value with the reference value and the lighting value, detected by the optical sensor (6), with the reference value, for the emission of a signal that corresponds to a fault if at least one of the values compared with the corresponding reference value does not match.

## Description

The present invention relates to an assembly for detecting the light emission of emergency light sources, particularly of the LED type.

In electronics, a light emitting diode or LED is an optoelectronic device that utilizes the optical properties of some semiconducting materials to generate photons by means of the phenomenon of spontaneous emission, i.e., starting from the recombination of electron-hole pairs.

LEDs are used increasingly in the field of lighting technology as a replacement of some traditional light sources. Their use in domestic lighting, therefore as a replacement of incandescent, halogen or compact fluorescent lamps (commonly known as energy-saving lamps) is currently possible with considerable results achieved thanks to the innovative techniques developed in the field.

Emergency lighting needs to ensure certain lighting levels.

To facilitate these checks, emergency lamps often have testing assemblies that can provide a summary analysis of the efficiency of the light source.

To check the correct operation of emergency lighting lamps when they use LEDs as light sources, the electrical parameters, such as voltage and current, applied to said light source are measured.

In cases of faults that can occur at the LED light source, cases have been observed in which the electric power supply parameters are met but the light emission of the LED is compromised and therefore nil or below the stated values.

However, checking the light actually emitted by the LED light source is not always feasible due to the possible presence of ambient light (sunlight and/or artificial lighting).

The aim of the present invention is to solve the problems described above, proposing an assembly for detecting the light emission of emergency light sources, particularly of the LED type, that is suitable to monitor the correct lighting level of said emergency light source.

Within the scope of this aim, an object of the invention is to propose an assembly for detecting the light emission of emergency light sources, particularly of the LED type, that allows checking the actual light emission of the source even in the presence of ambient light.

Another object of the invention is to propose an assembly for detecting the light emission of emergency light sources, particularly of the LED type, that is capable of comparing the light emission values with the electrical parameters of the power supply signal of the light source in order to allow diagnosis of any fault.

A further object of the present invention is to provide an assembly for detecting the light emission of emergency light sources, particularly of the LED type, that has low costs, is relatively simple to provide in practice and is safe in application.

This aim, as well as these and other objects that will become more apparent hereinafter, are achieved by an assembly for detecting the light emission of emergency light sources, particularly of the LED type, said assembly being of the type that comprises at least one detector of the power supply voltage of the at least one light source having a predefined emission frequency, at least one element for measuring the current that circulates in the at least one light source, characterized in that it comprises at least one optical sensor at the predefined frequency of said light source, a first filtering optical screen, which is permeable only to luminous radiation having a frequency that is proximate to the predefined frequency, said first optical screen being interposed between said at least one optical sensor and the at least one light source, a second filtering optical screen for the conversion of the incident luminous radiation into luminous radiation in the visible spectrum during its passage through said second screen, a control unit comparing the detected voltage value with the reference value, the detected current value with the reference value and the lighting value, detected by said optical sensor, with the reference value, for the emission of a signal that corresponds to a fault if at least one of the values compared with the corresponding reference value does not match.

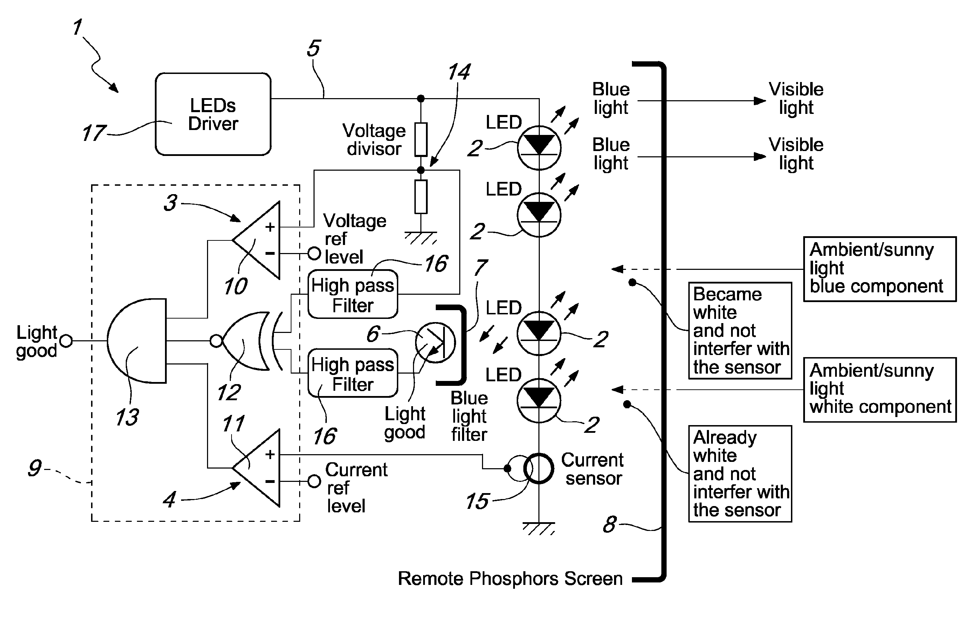

Further characteristics and advantages of the invention will become more apparent from the description of a preferred not exclusive embodiment of the assembly for detecting the light emission of emergency light sources, particularly of the LED type, according to the invention, illustrated by way of non-limiting example in the accompanying drawings, wherein the only figure is a possible circuit diagram of an assembly for detecting the light emission of emergency light sources, particularly of the LED type, according to the invention.

With particular reference to the figure, the numeral 1 generally designates an assembly for detecting the light emission of emergency light sources, particularly of the LED type 2.

The assembly 1 comprises at least one detector 3 of the power supply voltage of the at least one light source 2 (the reference numeral 2 expressly references the case of light sources constituted by LEDs, although the possibility is not excluded of employing the present invention in emergency light sources that do not use LEDs but other types of luminous radiation sources) having a predefined emission frequency.

Furthermore, the assembly 1 comprises at least one element 4 for measuring the current that circulates in the at least one light source 2.

The electric power supply is provided to the sources 2 by means of a specific line 5.

The assembly 1 according to the invention comprises furthermore at least one optical sensor that is polarized at the predefined frequency of the light source 2.

In practice, the optical sensor 6 recognizes exclusively the presence of luminous radiation that has a frequency proximate to the predefined one, without considering luminous radiation having a different frequency.

The assembly 1 furthermore includes a first filtering optical screen 7, which is permeable only to the luminous radiation having a frequency that is proximate to the predefined frequency.

Said first optical screen 7 is interposed between the at least one optical sensor 6 and the at least one light source 2.

Thanks to the presence of the filtering screen 7, there is the certainty that the luminous radiation that is incident on the optical sensor 6 assuredly has a frequency whose value is proximate to the predefined frequency.

The assembly 1 furthermore provides for the presence of a second filtering optical screen 8 to convert the incident luminous radiation into luminous radiation in the visible spectrum during its passage through said second screen 8.

The second filtering screen 8 faces and is proximate to the light sources 2: although the sources 2 emit luminous radiation at the predefined frequency, upon passing through the filtering screen 8 this radiation undergoes a conversion and is transmitted to the outside exclusively as luminous radiation in the visible spectrum.

In this manner, even if the use of light sources 2 is assumed that emit radiation at a non-visible frequency (for example in the ultraviolet range), the crossing of the second filtering screen 8 ensures the conversion of the frequency of said radiation, bringing it into the visible spectrum and thus ensuring that the device works as a lamp (in this specific case as an emergency lamp).

A control unit 9 is preset to compare the detected voltage value with the reference value, the detected current value with the reference value and the lighting value, detected by the optical sensor 6, with the reference value.

Said unit 9 emits a signal that corresponds to a fault if at least one of the compared values fails to match the corresponding reference value.

According to a possible constructive solution of unquestionable interest in practice and in application, the optical sensor 6 can be constituted by a photodetector, a photoresistor (a device whose operation is based on photogenerated charges, i.e., on the electrons excited by the incident light from the valency band to the conduction band, in a semiconductor), a photodiode (a device whose operation is based on the charges photogenerated in a p-n junction), a photovoltaic cell (a device that is similar to a photodiode but does not have to be biased in order to operate), a phototransistor (a device that is similar to a photodiode but with signal amplification), a Charge Coupled Device (CCD) (an integrated circuit based on charges that are photogenerated in a semiconductor), a Charge Injection Device (CID) (also an integrated circuit based on charges photogenerated in a semiconductor), a phototube (devices in which light causes the emission of electrons from a cathode in a vacuum tube), a photomultiplier (a device that is similar to a phototube but with amplification of the emitted electrons), and the like.

It is specified, furthermore, that the control unit 9 comprises preferably a first operational amplifier 10, which has at one input a signal that is proportional to the power supply voltage of the light source 2 and, at the other end, the voltage reference value.

Said unit 2 comprises furthermore a second operational amplifier 11, which has at one input a signal that is proportional to the current that circulates in the light source 2 and, at the other input, the current reference value.

Finally, the unit 2 is provided with an X-NOR logic operator 12, which has at one input the signal emitted by the optical sensor 6 and at the other input the voltage reference value.

The outputs of the first operational amplifier 10, of the second operational amplifier 11 and of the X-NOR logic operator 12 reach the inputs of an AND logic operator 13, which has in output a high value only if all the signals at its inputs have the high value.

It is necessary to point out that in the scope of a particularly efficient constructive solution, a voltage divider 14 is interposed between the first operational amplifier 10 and the power supply line of the light source 2 in order to adapt the voltage value at the input of the amplifier 10 to the reference value.

It is specified that the set of components constituted by the first operational amplifier 10 and by the voltage divider 14 constitutes the detector 3 of the power supply voltage of the at least one light source 2.

Likewise, between the second operational amplifier 11 and the power supply line of the light source 2 there is an interposed current detector 15 for acquiring a signal that is proportional to the value of the current that circulates on the light source 2, said value being proportional and of the same order of magnitude as the corresponding reference value.

In this case also, it is specified that the set of components constituted by the second operational amplifier 11 and by the current detector 15 constitutes the element 4 for measuring the current that circulates in the at least one light source 2.

It is specified that, in relation to an efficient application of the present invention, the current detector 15 can be constituted positively by a current transformer (or instrument transformer).

It should be specified, furthermore, that the X-NOR logic operator 12 can be constituted by an X-OR logic operator that has at one input the signal emitted by the optical sensor 6 and at the other input the voltage reference value, to the output of which a NOT logic operator is cascade-connected and whose output is connected to one of the inputs of the AND logic operator 13.

Of course, each component can in fact be obtained by combining other known components according to logic criteria that are also of a known type, falling nonetheless within the valid scope of the present invention.

With particular reference to the constructive solution that adopts the assembly 1 in an apparatus for emergency lighting whose light sources are constituted by LEDs 2, it is specified that they are preset to emit luminous radiation of predefined frequency.

The first filtering screen 7 is therefore suitable to operate as a bandpass filter, since it is impermeable to luminous radiation of all frequencies except in the neighborhood of the predefined frequency.

The second filtering screen 8 is instead a converter of the incident luminous radiation from radiation at a predefined frequency to radiation in the visible spectrum.

It is therefore appropriate to clarify that between the voltage divider 14 and the corresponding input of the X-NOR logic operator 12 and between the output of the optical sensor 6 and the corresponding input of the X-NOR logic operator 12 respective high-pass filters 16 are interposed to eliminate signals that have a frequency that is lower than the modulation frequency of the voltage/current supplied by the driving circuit 17 during verification steps.

Finally, it is specified that the assembly 1 comprises a driving circuit 17 for the at least one light source 2: the circuit 17 is adapted to deliver constant voltage and current.

It is specified furthermore that the driving circuit 17 is provided with means for modulating the voltage and the current at its terminals in order to allow specific steps of verification of the light source.

The assembly 1 therefore verifies the actual luminous emission of the LED source 2 even in the presence of ambient light: the first filtering screen 7 can in fact be crossed exclusively by luminous radiation having the predefined frequency and therefore the optical sensor 6 is not subject to the effect of luminous radiation that originates from the outside (for example sunlight and/or artificial lights).

In any case, it is possible to provide polarization of the sensor 6, which will have the purpose of determining in any case the assessment of only the incident radiation component at the preset frequency, ignoring all radiation at different frequencies.

The operation of the invention provides for the supply of the light sources 2 (more specifically the LEDs) in the manner suitable for correct operation, in general with a suitable direct current and appropriate voltage.

Perform, by means of the driving circuit 17, modulation of the current supplies power to the light sources 2 so that it is possible to check, by means of the (optionally polarized) optical sensor 6, the actual light emission of at least one of said light sources 2.

The diagnostic method is based on the detection of the emitted light, comparing it with the corresponding modulation to which the current applied to the light source 2 is subjected.

At the same time it is possible to complete the checking of operation with conventional means for reading current and voltage (by means of the detector 3 of the power supply voltage of the at least one light source 2 and the element 4 for measuring the current that circulates in the at least one light source 2).

The invention, by means of the second filtering screen 8, which converts light at the predefined frequency into white flight, eliminates simultaneously the interference of ambient light or sunlight. The second screen 8 in fact prevents radiation of predefined frequency from crossing it (converting it into radiation in the visible spectrum). This visible-spectrum radiation that passes through the second filtering screen 8 is in turn rejected by the first filtering screen 7 and in any case (if the optical sensor 6 of the polarized type is adopted) it does not belong to the frequency band of acquisition of any polarized optical sensor 6.

Advantageously, the present invention solves the problems described above, proposing an assembly 1 for detecting the light emission of emergency light sources 2, particularly of the LED type, that is adapted to monitor the correct lighting level of said emergency light source 2.

Said assembly 2 is in fact capable of detecting the light emission and of checking that the intensity is higher than a predefined threshold value (which can be preset by calibrating the high-pass filters 16).

Conveniently, the present invention is capable of verifying the actual light emission of the source even in the presence of ambient light, thanks to the ability to ignore radiation of the visible spectrum, selecting only luminous radiation at a predefined frequency (by the presence of the filtering screens 7 and 8 and/or by the polarization of the sensor 6).

Efficiently, the assembly 1 according to the invention is capable of comparing the light emission values with the electrical parameters of the power supply signal of the light source 2 in order to ensure a diagnosis of any fault.

Conveniently, the assembly 1 according to the invention has low costs and is relatively simple to provide in practice as well as safe in application.

The invention thus conceived is susceptible of numerous modifications and variations, all of which are within the scope of the appended claims; all the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

The disclosures in Italian Patent Application no. BO2012A000674, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An assembly for detecting the light emission of emergency light sources (2), particularly of the LED type, said assembly (1) being of the type that comprises at least one detector (3) of the power supply voltage of the at least one light source (2) having a predefined emission frequency, at least one element (4) for measuring the current that circulates in the at least one light source (2), **characterized in that** it comprises at least one optical sensor (6) at the predefined frequency of said light source (2), a first filtering optical screen (7), which is permeable only to luminous radiation having a frequency that is proximate to the predefined frequency, said first optical screen (7) being interposed between said at least one optical sensor (6) and the at least one light source (2), a second filtering optical screen (8) for the conversion of the incident luminous radiation into luminous radiation in the visible spectrum during its passage through said second screen (8), a control unit (9) comparing the detected voltage value with the reference value, the detected current value with the reference value and the lighting value, detected by said optical sensor (6), with the reference value, for the emission of a signal that corresponds to a fault if at least one of the values compared with the corresponding reference value does not match.

2. The assembly according to claim 1, **characterized in that** said optical sensor (6) is selected preferably from photodetectors, photoresistors, photodiodes, photovoltaic cells, phototransistors, Charge-Coupled Devices (CCD), Charge Injection Devices (CID), phototubes, photomultipliers and the like.

3. The assembly according to claim 1, **characterized in that** said control unit (9) comprises a first operational amplifier (10) that has, at one input, a signal that is proportional to the supply voltage of the light source (2) and, at the other input, the voltage reference value, a second operational amplifier (11) having, at one input, a signal that is proportional to the current that circulates in the light source (2) and, at the other input, the current reference value, an X-NOR logic operator (12) that has at one input the signal emitted by said optical sensor (6) and at the other input the voltage reference value, the outputs of the first operational amplifier (10), of the second operational amplifier (11) and of the X-NOR logic operator (12) reaching the inputs of an AND logical operator (13) that has in output a high-value signal only if all the signals at its inputs have the high value.

4. The assembly according to claim 3, **characterized in that** a voltage divider (14) is interposed between said first operational amplifier (10) and the power supply line (5) of said light source (2) in order to adapt the voltage value at the input of said amplifier (10) to the reference value.

5. The assembly according to claim 3, **characterized in that** a current detector (15) is interposed between said second operational amplifier (11) and the power supply line (5) of said light source (2) in order for acquiring a signal that is proportional to the value of the current that circulates on the light source (2), said value being proportional and of the same order of magnitude as the corresponding reference value.

6. The assembly according to claim 5, **characterized in that** said current detector (15) is a current transformer.

7. The assembly according to claim 3, **characterized in that** said X-NOR logic operator (12) is constituted by an X-OR logic operator that has at one input the signal emitted by said optical sensor (6) and at the other input the voltage reference value, to the output of which a NOT logic operator is cascade-connected, its output being connected to one of the inputs of said AND logic operator (13).

8. The assembly according to one or more of the preceding claims, **characterized in that** the light sources (2) are LEDs designed to emit luminous radiation of predefined frequency, said first filtering screen (7) acting as a bandpass filter, being permeable only to the radiation close to the predefined frequency, said second filtering screen (8) being a converter of the incident luminous radiation from luminous radiation at a predefined frequency to luminous radiation in the visible spectrum.

9. The assembly according to one or more of the preceding claims, **characterized in that** respective high-pass filters (16), for eliminating signals whose frequency is lower than the modulation frequency set by the driving circuit (17), during operating tests, are interposed between said voltage divider (14) and the corresponding input of said X-NOR logic operator (12) and between the output of said optical sensor (6) and the corresponding input of said X-NOR logic operator (12).

10. The assembly according to one or more of the preceding claims, **characterized in that** it comprises a circuit (17) for driving the at least one light source (2), which is adapted to deliver constant voltage and current and is provided with means for modulating the voltage and the current at its terminals.
